# EUROPEAN PATENT SPECIFICATION

(11) **EP 2 969 592 B1**
(45) Date of publication and mention of the grant of the patent: **22.08.2018**
(21) Application number: 14714404.2
(22) Date of filing: 11.03.2014
(51) Int. Cl.: B60B 35/08, B60G 7/00, B60G 9/00

(54) **WHEEL AXLE SUSPENSION WITH V-SHAPED STRAPS**
ACHSAUFHÄNGUNG MIT V-FÖRMIGEN GEWINDEBÜGELN
ESSIEU DE SUSPENSION AVEC CAVALIERS EN FORME DE V

(30) Priority: 15.03.2013 NL 2010459
(43) Date of publication of application: 20.01.2016
(73) Proprietor: VDL Weweler B.V., 7325 WC Apeldoorn (NL)
(72) Inventor: AALDERINK, Derk Geert, NL-7245 NV Laren (NL)
(74) Representative: EP&C
(86) International application number: PCT/NL2014/050143
(87) International publication number: WO 2014/142656

(56) References cited:
- EP-A1- 2 844 499
- WO-A1-2012/078031
- WO-A1-2012/154032
- DE-A1- 19 946 802
- DE-A1-102012 207 157
- DE-C1- 4 224 965
- DE-U1- 29 615 286

## Description

The invention relates to a wheel axle suspension of a vehicle, in particular a utility vehicle such as a lorry, a trailer or a semi-trailer.

In particular the invention relates to a wheel axle suspension of a vehicle according to the preamble of claim 1.

A wheel axle suspension of this type is disclosed in WO 2012/078031, in which a trailing arm has a curved portion with a concave underside. Between the axle body and a portion of the concave underside of the trailing arm an intermediate member is arranged. Another portion of the concave underside of the trailing arm engages the axle body directly. U-shaped straps engage the axle body from an underside and have almost parallel legs which extend upwards along a front and a rear side of the axle body. The legs of the straps are provided with a male thread which are used in cooperation with nuts to tension the clamping connection between the axle body and the trailing arm together. The clamping force provided by the clamping straps is essentially perpendicular to the trailing arm.

In DE 199 46 802 A1 a similar wheel axle suspension is disclosed in which a trailing arm has a curved portion with a concave underside. Between the axle body and the concave underside of the trailing arm an adaptor part is arranged. The U-shaped straps engage the axle body from an underside and in this case have parallel legs which extend upwards along a front and a rear side of the axle body. The legs of the straps are provided with a male thread which in cooperation with nuts are used to tension the clamping connection between the axle body and the trailing arm together. The clamping force provided by the clamping straps is essentially perpendicular to the trailing arm.

Another type of wheel axle suspension is disclosed in DE 29615286 U1. In this suspension the axle body is clamped directly against a concave underside of the trailing arm by means of a clamping plate engaging the axle body from below. The clamping plate is tightened against the axle body by means of a front U-shaped strap and a rear U-shaped strap. The front U-shaped strap and rear U-shaped strap each extend in transverse direction over the trailing arm with their curved portion. The legs of the U-shaped straps extend downwards along the lateral sides of the trailing arm and through bores in the clamping plate. The strap legs have threaded ends on which nuts are screwed to tighten the clamping plate against the axle body.

The object of the invention is to provide an improved wheel axle suspension.

This object is achieved by a wheel axle suspension according to claim 1.

Preferably the wheel axle suspension according to the invention has two clamping straps arranged, one on either side of the trailing arm.

According to the invention the angle between the front leg and the rear leg of the strap is within the range 90° - 170°. Without wishing to be bound by any delimitation, in particular a generally V-shaped strap is preferred wherein the angle between the legs is about 110°.

The wheel axle suspension according to the invention has one or more straps that do not have parallel strap legs. Thereby the clamping force has not only a vertical component, but also a horizontal component. The latter has the effect that the front side and the rear side of the axle seating portion of the trailing arm are tightened slightly together and the surface of the axle seating portion facing the axle body is as it were tightened around the axle body. The resulting deformation of the trailing arm results in a controllable pre-tension that is provided in the trailing arm at the axle seating portion. An advantage is that the changing tension loads due to roll movement of the vehicle are not absorbed in the axle seating portion of the trailing arm, but in the front spring portion of the trailing arm and in the strap itself. This assures a more rigid clamping construction which is not prone to wear and fatigue.

In a possible embodiment at least one of the front leg and rear leg of the strap is provided with a male threaded end. The male threaded end allows for cooperation with a nut to tension the strap against the trailing arm itself or against a support part that is supported by the trailing arm.

In a preferred embodiment both the rear leg and front leg of the strap are provided with a male threaded end.

In a possible embodiment two clamping straps are interconnected, in particular the rear legs or the front legs of the said two clamping straps are interconnected by a bridge portion extending in the width direction over the trailing arm. Preferably, the two clamping straps and the bridge portion are made in one piece.

In a preferred embodiment the axle body has a substantially circular cross section and the axle seating portion of the trailing arm has a curved form with a curved concave side engaging the axle body. The curved concave side preferably encloses the circumference of the axle body over 120° - 180°.

In a possible embodiment a half cylindrical shell is arranged around a portion of the circumference of the axle body, wherein a portion of said shell is clamped between the strap and the axle body.

Preferably, the shell is provided with a first nose portion bulging out of the cylindrical surface that engages the curved portion of the trailing arm at the front end thereof in line with the front strap leg. The shell is preferably provided with a second nose portion bulging out of the cylindrical portion adjacent the first nose portion that engages the strap.

Preferably at one end of the shell a bead is formed, and wherein in the axle body and in the concave side of the curved portion of the trailing arm a recess is formed in which the bead is received as a locking structure.

In another preferred embodiment the axle body has a substantially rectangular cross section. In this embodiment the axle seating portion of the trailing arm is formed as an angular portion constituted by the front spring portion and a downwardly extending portion of the trailing arm adjoining the front spring portion at a rear end thereof and extending substantially perpendicular to the front spring portion.

Preferably, the axle seating portion encloses about 50% of the perimeter of the square axle body.

The invention will be elucidated in the following detailed description with reference to the drawing, in which:
Fig. 1 shows a portion of a wheel axle suspension according to the invention with clamping straps in a non-tightened state,
Fig. 2 shows the wheel axle suspension of Fig. 1 in which the effect of tightening the straps is illustrated,
Fig. 3 shows the wheel axle suspension as shown in Fig. 2 in which the effects of the loads in a working condition are illustrated,
Fig. 4 shows in a side elevational view another embodiment of a wheel axle suspension according to the invention,
Fig. 5 shows schematically a detail of the wheel axle suspension of Fig. 4, and
Fig. 6 shows schematically in a cross section in the longitudinal direction another embodiment of a wheel axle suspension according to the invention with a square axle body.

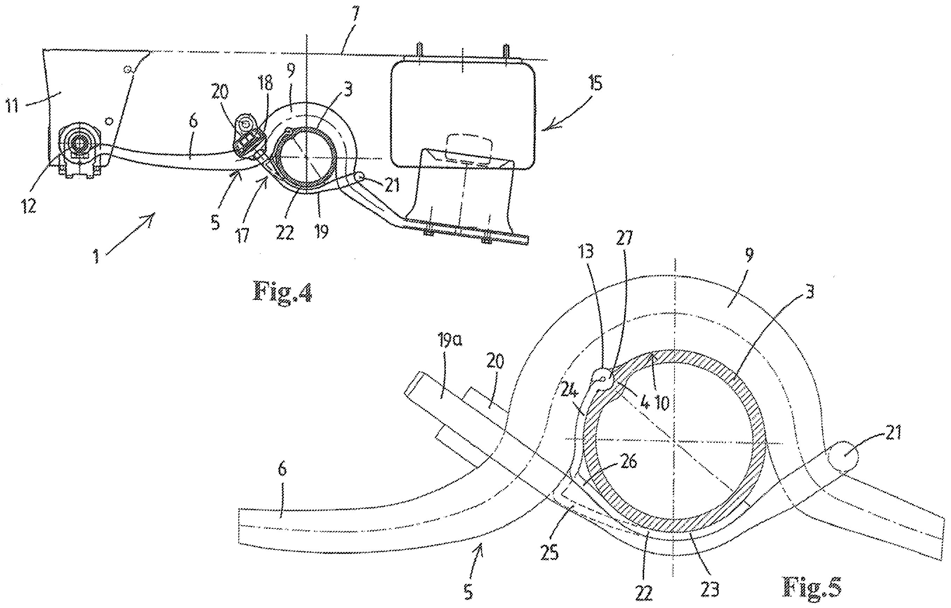

In Fig. 4 is shown an example of a wheel axle suspension according to the invention.
The vehicle axle suspension 1 comprises a tubular axle body 3 to which wheels can be attached on both sides of the axle body 3. The axle body 3 is mounted to a vehicle by resilient trailing arms 5 which extend in the longitudinal direction of the vehicle on both sides of the vehicle. In the side view of Fig. 4 only one trailing arm 5 is depicted.

The axle body 3 has a circular cross section. The trailing arm 5 crosses the axle body 3 substantially perpendicular. At the location of the axle body 3, the trailing arm has an axle seating portion, which in this embodiment is a curved portion 9, wherein the axle body 3 is arranged on the concave underside of the curved portion 9 of the trailing arm 5, i.e. the axle body 3 is received in an axle seat formed by the concave underside of the curved portion. The curved concave underside encloses the circumference of the axle body over 120° - 180°, in the figure about 180°.

The trailing arm 5 is hingedly connected to a bearing bracket 11 arranged on the vehicle chassis 7 at the front of the suspension arm seen in the direction of travel of the vehicle which in this figure is to the left. The trailing arm 5 is thus able to hinge about hinge axis 12.

Each trailing arm 5 is provided with a pneumatic spring 15 which is operational between the respective suspension arm 5 and the vehicle chassis 7. In this embodiment, the pneumatic spring 15 is attached to the rear side of the trailing arm 5 seen in the direction of travel of the vehicle.

A clamping assembly 17 associated with each trailing arm 5 is provided to retain the axle body 3 and the trailing arm 5 by clamping. In this embodiment, the clamping assembly comprises a strap plate 18 provided at the front side of the axle body and two straps 19 (of which only one can be seen in Fig. 4) which extend from the front side of the axle body 3 to the rear side of the axle body 3 via the underside of the axle body 3. The front end of the straps 19 are provided with a male thread and with a nut 20 which cooperates with the male thread.

In this embodiment the rear ends of the straps are interconnected by a bridge part 21 which is monolithically formed with the straps 19. The bridge part 21 extends in the width direction of the trailing arm 5 over the upper side of the trailing arm, just behind the curved portion 9. By tightening the nuts 20, clamping forces can be applied to the trailing arm 5 and axle body 3. The strap plate 18 engages with the upper side of the trailing arm at the transition between the curved portion 9 and the spring portion 6 of the trailing arm, while the straps 19 engage with the underside of the axle body 3.

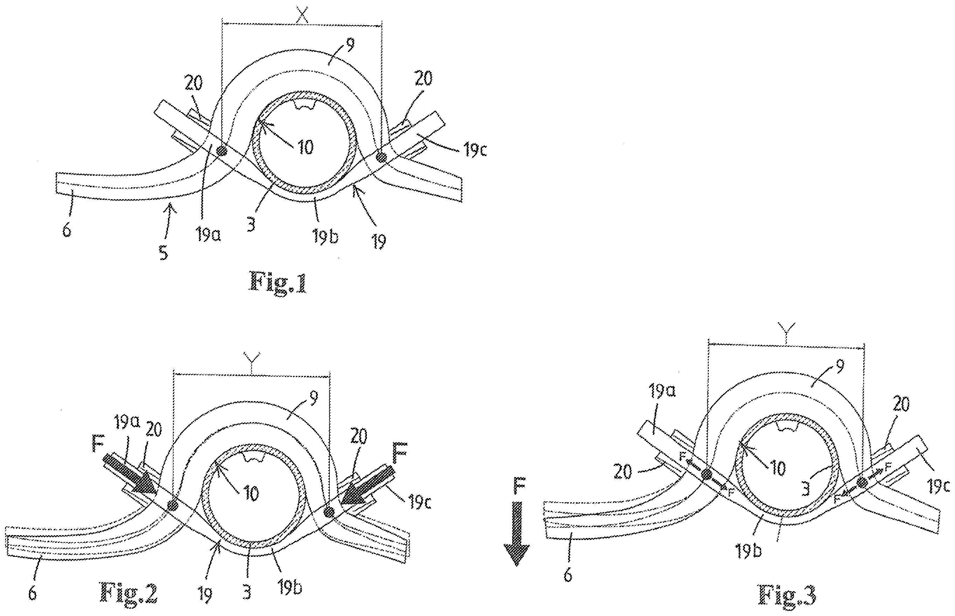

In Fig. 1 a portion of a similar wheel axle suspension is depicted schematically. In this figure both ends of the strap 19 are provided with a male thread and a nut 20. Obviously a clamping body similar to strap plate 18 as shown in Fig. 4 is available at which the nuts 20 engage, but is not visible in this figure.

The straps 19 have generally a V-shape as can be seen in the figure. The strap 19 has a front leg 19a, a rear leg 19c and an arched portion 19b that interconnects the deviating legs 19a and 19c of the strap 19. In the mounted state, the arched portion 19b extends around a part of the circumference of the axle body 3.

In Fig. 1 the clamping assembly is in a neutral state - a non-tightened state in which the nuts are not tightened. In Fig. 2 the clamping assembly is shown in a tightened state with pre-tension. Fig. 2 shows the effect when the nuts are tightened. The tightening forces are illustrated by an arrow indicated with F. Due to the general V-shape of the strap 19 the clamping force has not only a vertical component, but also a horizontal component. The horizontal clamping force component has the effect that the front side and the rear side of the curved portion 9 of the trailing arm are tightened slightly together. This is indicated by the note that the distance X from the neutral state of Fig. 1 has been reduced to distance Y in the pre-tensioned state (Y<X). The concave surface 10 is as it were tightened around the axle body 3. The resulting deformation of the trailing arm 5 results in a controllable pre-tension that is provided in the trailing arm 5 at the clamping region, i.e. at the curved portion 9.

In Fig. 3 is shown the laden condition (working). It shows schematically how the trailing arm is loaded, for instance due to roll movements of the vehicle. It can be seen in Fig. 3 that the deformation of the spring part 6 of the trailing arm does not progress beyond the clamping straps 19 (Y=Y). This is due to the pre-tension brought in the curved portion 9 of the trailing arm 5 by this specifically designed V-shaped straps 19. Therefore the loads during working condition are not absorbed in the curved portion 9 of the trailing arm 5, but in the spring portion 6 of the trailing arm. Also the strap 19 itself absorbs some of the forces. A more rigid clamping construction which is not prone to wear and fatigue is the result.

In the embodiment of Fig. 4 a half cylindrical shell 22 is provided, which can be better seen in Fig. 5. The half cylindrical shell 22 has a cylinder segment portion 23 that is located between the strap 19 and the axle body 3. The shell 22 also has a cylinder segment portion 24 that is located between the concave side of the curved portion 9 and the axle body. Between the portions 23 and 24 there is provided a first nose portion 25 that extends between the front legs 19a of the two parallel straps 19, and that engages the underside of the trailing arm 5 at the convexly shaped transition of the concave surface 10 towards the front spring portion 6. Adjacent the first nose portion 25 a second nose portion 26 is arranged. The second nose portion 26 engages the strap 19, in particular the front leg 19a of the strap 19. The nose portions 25,26 provide rigidity to the shell 22, which is made of metal sheet material.

At the end of the cylinder segment portion 24 a bead 27 is formed, e.g. by folding the plate material to an eyelet. The bead 27 is received in a groove-like indent 4 that extends in the axle body 3 in the longitudinal direction thereof. On the opposite side a groove-like indent 13 is formed in the concave surface 10 of the curved portion 9. The cylindrical shell 22 provides a locking mechanism to lock the axle body 3 against undesired rotation with respect to the trailing arm 5.

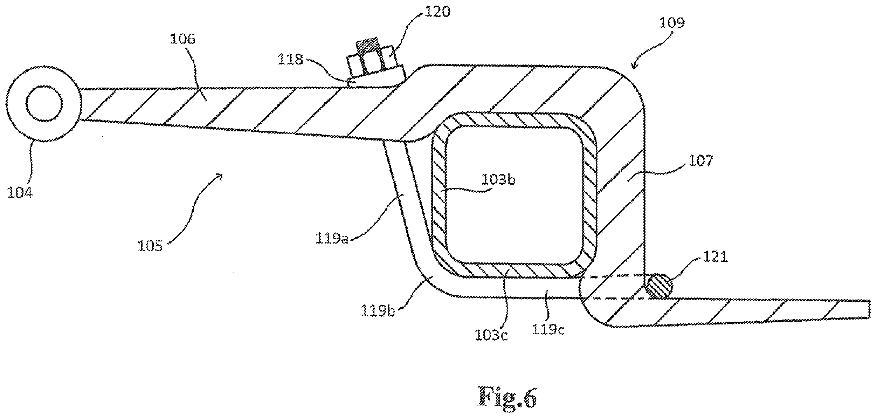

In Fig. 6 another embodiment of a part of a wheel axle suspension according to The invention is shown. The wheel axle suspension comprises an axle body 103 of a wheel axle of the vehicle, the axle body 103 having a substantially square cross section. The suspension furthermore has a flexible trailing arm 105 extending in a longitudinal direction of the vehicle and crossing the axle body 103 substantially perpendicular. The trailing arm 105 has a front spring portion 106 extending in the longitudinal direction of the vehicle. The front spring portion 106 has an eyelet 104 formed at a front end and a downwardly extending portion 107 adjoining the front spring portion 106 at a rear end thereof. The downwardly extending portion 107 extends substantially perpendicular to the front spring portion 106. The axle body 103 is arranged in the right angle portion 109 formed by the front spring portion 106 and the downwardly extending portion 107. The right angle portion thus forms an axle seating portion of the trailing arm 105. The right angle portion encloses about 50% of the perimeter of the axle body. The suspension furthermore comprises a clamping strap 119 on either side of the trailing arm 105 for clamping the axle body 103 and the trailing arm 105 together.

The clamping straps 119 each have a front leg 119a and a rear leg 119c and an arched or angular portion 119b interconnecting said front and rear leg 119a, 119c. The strap 119 is generally V-shaped. The arched or angular portion 119b extends around a lower front corner 103a of the axle body 103 and said legs 119a, 119c of the strap 119 are tensioned with respect to the trailing arm 105, such that the axle body 103 is clamped between the arched or angular portion 119b of the strap 119 and said right angle portion 109 of the trailing arm 105. The axle body 103 is arranged directly against the right angle portion 109 of the trailing arm 105. The front leg 119a of the strap 119 extends upwards along a front side 103b of the axle body 103 and is supported at the front side of the right angle portion 109. The rear leg 119c of the strap 119 extends along an underside 103c of the axle body 103 towards the rear and is supported at the rear side of the right angle portion 109.

In particular the front leg 119a of the strap 119 is supported at the front end of the axle seating portion 109 by inserting the front leg through a bore in a strap plate 118 that is located on the upper side of the trailing arm 105 at the front end of the axle seating portion 109. The front leg is tightened with respect to the strap plate 118 and the trailing arm 105 by a nut 120 that cooperates with the male thread on the front leg 119a of the strap 119. The trailing arm 105 has a recess 123 in the side at the front end of the axle seating portion 109, in which the front leg 119a of the strap 119 is received.

The rear legs 119c of the two straps 119 that are arranged on either side of the trailing arm 105 are interconnected by a bridge part 121. The bridge part 121 extends in the width direction of the trailing arm 105 over the upper side of the trailing arm 105 just behind the downwardly extending portion 107 of the axle seating portion 109 of the trailing arm 105. This structure is similar to the one shown in Figs 4 and 5.

## Claims

1. A wheel axle suspension (1) of a vehicle comprising:
- an axle body (3; 103) of a wheel axle of the vehicle,
- a flexible trailing arm (5; 105) extending in a longitudinal direction of the vehicle and crossing the axle body (3; 103) substantially perpendicular, said trailing arm (5; 105) having a front spring portion (6; 106)extending in the longitudinal direction of the vehicle and said trailing arm (5; 105) having anaxleseating portion (9; 109) adjoining the front spring portion (6; 106), said axle seating portion (9; 109) having a concave side at which the axle body (3; 103) is arranged,
- at least one clamping strap (19; 119) for clamping the axle body (3; 103) and the trailing arm (5; 105) together, the at least one clamping strap (19; 119) has a front leg (19a; 119a) and a rear leg (19c; 119c) and an arched portion (19b; 119b) interconnecting said front and rear leg, wherein the arched portion (19b; 119b) extends around a part of the circumference of the axle body (3; 103) and said legs (19a, 19c; 119a, 119c) of the strap (19; 119) are tensioned with respect to the trailing arm (5; 105), such that the axle body (3; 103) is clamped between the arched portion (19b; 119b) of the strap (19; 119) and said concave side of the axle seating portion (9; 109) of the trailing arm (5; 105),
wherein said axle body (3; 103) is arranged directly against the concave side of the axle seating portion (9; 109) of the trailing arm (5; 105), and
wherein the front leg (19a; 119a) of the strap (19; 119) extends towards the front through or along the side of the trailing arm (5; 105) and is supported at the front side of the axle seating portion (9; 109) and the rear leg (19c; 119c) of the strap (19; 119) extends through or along the side of the trailing arm (5; 105) towards the rear and is supported at the rear side of the axle seating portion (9; 109),
**characterized in that** the angle between the front leg (19a; 119a) and the rear leg (19c; 119c) of the strap (19; 119) is within the range 90° - 170°.

2. The wheel axle suspension according to claim 1, wherein the angle between the front leg and the rear leg of the strap is around 110°.

3. The wheel axle suspension according to any one of claims 1 - 2, wherein at least one of the front leg (19a; 119a) and rear leg (19c; 119c) of the strap (19; 119) is provided with a male threaded end.

4. The wheel axle suspension according to claim 3, wherein both the rear leg (19c) and front leg (19a) of the strap (19) are provided with a male threaded end.

5. The wheel axle suspension according to any one of the claims 1 - 4, wherein two clamping straps (19; 119) are arranged, one on either side of the trailing arm (5).

6. The wheel axle suspension according to claim 5, wherein the rear legs (19c; 119c) or the front legs of the said two clamping straps (19; 119) are interconnected by a bridge portion (21, 121) extending in the width direction over the trailing arm (5; 105).

7. The wheel axle suspension according to claim 6, wherein the two clamping straps (19; 119) and the bridge portion (21, 121) are made in one piece.

8. The wheel axle suspension according to any one of the preceding claims, wherein the axle body (3) has a substantially circular cross section and wherein the axle seating portion (9) of the trailing arm (5) has a curved form with a curved concave side engaging the axle body (3).

9. The wheel axle suspension according to claim 8, wherein the curved concave side encloses the circumference of the axle body (3) over 120° - 180°.

10. The wheel axle suspension according to claim 8 or 9, wherein a half cylindrical shell (22) is arranged around a portion of the circumference of the axle body (3), wherein a portion (23) of said shell (22) is clamped between the strap (19) and the axle body (3).

11. The wheel axle suspension according to claim 10, wherein the shell (22) is provided with a first nose portion (25) bulging out of the cylindrical surface that engages the curved portion (9) of the trailing arm (5) at the front end thereof in line with the front strap leg (19a).

12. The wheel axle suspension according to claim 11, wherein the shell (22) is provided with a second nose portion (26) bulging out of the cylindrical portion adjacent the first nose portion (25) that engages the strap (19).

13. The wheel axle suspension according to any one of the claims 10 - 12, wherein at one end of the shell (22) a bead (27) is formed, and wherein in the axle body (3) and in the concave side of the curved portion (9) a recess (4, 13) is formed in which the bead (27) is received as a locking structure.

14. The wheel axle suspension according to any one of claims 1 - 7, wherein the axle body (103) has a substantially rectangular cross section and wherein the axle seating portion (109) of the trailing arm (105) is formed as an angular portion constituted by the front spring portion (106) and a downwardly extending portion (107) of the trailing arm (105) adjoining the front spring portion (106) at a rear end thereof and extending substantially perpendicular to the front spring portion (106).

15. The wheel axle suspension according to claim 14, wherein the axle seating portion (109) encloses about 50% of the perimeter of the axle body (103).

## Patentansprüche

1. Eine Radachsenaufhängung (1) eines Fahrzeugs mit:
- einem Achskörper (3; 103) einer Radachse des Fahrzeugs,
- einem flexiblen Längslenker (5; 105), der sich in einer Längsrichtung des Fahrzeugs erstreckt und der den Achskörper (3; 103) im Wesentlichen rechtwinklig kreuzt, wobei der genannte Längslenker (5; 105) einen sich in Fahrzeuglängsrichtung erstreckenden vorderen Federabschnitt (6; 106) hat, der sich in der Längsrichtung des Fahrzeugs erstreckt, und der genannte Längslenker (5; 105) einen Achslagerabschnitt (9; 109) aufweist, der an den vorderen Federabschnitt (6; 106) anschließt, der genannte Achslagerabschnitt (9; 109) hat eine konkave Seite, an der der Achskörper (3; 103) angeordnet ist,
- wenigstens einem Befestigungsbügel (19; 119) um den Achskörper (3; 103) und den flexiblen Längslenker (5; 105) zusammen zu halten, wobei der mindestens eine Befestigungsbügel (19; 119) einen vorderen Schenkel (19a; 119a) und einen hinteren Schenkel (19c; 119c) und einen den genannten vorderen Schenkel (19a; 119a) und den genannten hinteren Schenkel (19c; 119c) verbindenden bogenförmigen Abschnitt (19b; 119b) aufweist, wobei sich der bogenförmige Abschnitt (19b; 119b) um einen Teil des Umfang des Achskörpers (3; 103) erstreckt und die genannten Schenkel (19a, 19c; 119a, 119c) des Bügels (19; 119) gegenüber dem Längslenker (5; 105) gespannt sind, derart, dass der Achskörper (3; 103) zwischen dem bogenförmigen Abschnitt (19b; 119b) des Bügels und der konkaven Seite des Achslagerabschnitts (9; 109) des Längslenkers (5; 105) eingeklemmt ist,
wobei der Achskörper (3; 103) direkt gegen die konkave Seite des Achslagerabschnitts (9; 109) des Längslenkers (5; 105) angeordnet ist, und
wobei sich der vordere Schenkel (19a; 119a) des Bügels (19; 119) durch oder entlang der Seite des Längslenkers (5; 105) nach vorn erstreckt und an der Vorderseite des Achslagerabschnitts (9; 109) unterstützt ist und der hintere Schenkel (19c; 119c) des Bügels (19; 119) sich durch oder entlang der nach hinten weisenden Seite des Längslenkers (5; 105) erstreckt und an der Rückseite des Achslagerabschnitts (9; 109) unterstützt ist,
**dadurch gekennzeichnet, dass** der Winkel zwischen dem vorderen Schenkel (19a; 119a) und dem hinteren Schenkel (19c; 119c) des Bügels (19; 119) im Bereich von 90°-170° liegt.

2. Radachsenaufhängung nach Anspruch 1, wobei der Winkel zwischen dem vorderen Schenkel und dem hinteren Schenkel des Bügels etwa 110° beträgt.

3. Radachsenaufhängung nach einem der Ansprüche 1 - 2, wobei mindestens einer von dem vorderen Schenkel (19a; 119a) und dem hinteren Schenkel (19c; 119c) des Bügels (19; 119) mit einem männlichen Gewindeende versehen ist.

4. Radachsenaufhängung nach Anspruch 3, wobei sowohl der hintere Schenkel (19c) als auch der vordere Schenkel (19a) des Bügels (19) mit einem männlichen Gewindeende versehen sind.

5. Radachsenaufhängung nach einem der Ansprüche 1 - 4, wobei zwei klemmende Bügel jeweils zu beiden Seiten des Längslenkers (5) angeordnet sind.

6. Radachsenaufhängung nach Anspruch 5, **dadurch gekennzeichnet, dass** die hinteren Schenkel (19c; 119c) oder die vorderen Schenkel der beiden genannten klemmenden Bügel (19; 119) durch einen Brückenabschnitt (21, 121) miteinander verbunden sind, der sich in Breitenrichtung über den Längslenker (5; 105) erstreckt.

7. Radachsenaufhängung nach Anspruch 6, wobei die beiden klemmenden Bügel (19; 119) und der Brückenabschnitt (21, 121) in einem Stück gefertigt sind.

8. Radachsenaufhängung nach einem der vorhergehenden Ansprüche, wobei der Achskörper (3) einen im Wesentlichen kreisförmigen Querschnitt aufweist und wobei der Achslagerabschnitt (9) des Längslenkers (5) eine gekrümmte Form mit einer gekrümmten konkaven Seite aufweist, die mit dem Achskörper (3) in Anlage ist.

9. Radachsenaufhängung nach Anspruch 8, wobei die gekrümmte konkave Seite den Umfang des Achskörpers (3) über 120° - 180° umschließt.

10. Radachsenaufhängung nach Anspruch 8 oder 9, wobei ein halbzylindrisches Gehäuse (22) um einen Teil des Umfangs des Achskörpers (3) angeordnet ist, wobei ein Abschnitt (23) des Gehäuses (22) zwischen dem Bügel (19) und dem Achskörper (3) eingeklemmt ist.

11. Radachsenaufhängung nach Anspruch 10, wobei das Gehäuse (22) versehen ist mit einem aus der Zylinderfläche hervortretenden ersten Nasenabschnitt (25), der in den gekrümmten Abschnitt (9) des Längslenkers (5) an dessen vorderem Ende in Linie mit dem vorderen Bügelschenkel (19a) greift.

12. Radachsenaufhängung nach Anspruch 11, wobei das Gehäuse (22) mit einem aus dem zylindrischen Abschnitt neben dem ersten Nasenabschnitt (25) hervortretenden zweiten Nasenabschnitt (26) versehen ist, der mit dem Bügel (19) in Anlage ist.

13. Radachsenaufhängung nach einem der Ansprüche 10 - 12, wobei an einem Ende des Gehäuses (22) ein Wulst (27) ausgebildet ist, und wobei in dem Achskörper (3) und in der konkaven Seite des gekrümmten Abschnitts (9) eine Aussparung (4, 13) ausgebildet ist, in der der Wulst (27) unter Bildung einer Verriegelungsstruktur aufgenommen ist.

14. Radachsenaufhängung nach einem der Ansprüche 1 - 7, wobei der Achskörper (103) einen im Wesentlichen rechteckigen Querschnitt aufweist, und wobei der Achslagerabschnitt (109) des Längslenkers (105) als Winkelabschnitt ausgebildet ist, der von dem vorderen Federabschnitt (106) und einem sich nach unten erstreckenden Abschnitt (107) des Längslenkers (105) gebildet ist, welcher an seinem hinteren Ende an den vorderen Federabschnitt (106) an dessen rückwärtigem Ende angrenzt und sich im Wesentlichen rechtwinklig zu dem vorderen Federabschnitt (106) erstreckt.

15. Radachsenaufhängung nach Anspruch 14, wobei der Achslagerabschnitt (109) etwa 50% des Umfangs des Achskörpers (103) umschließt.

## Revendications

1. Suspension (1) d'essieu de roue d'un véhicule comprenant:
- un corps (3 ; 103) d'essieu d'un essieu de roue du véhicule,
- un bras tiré (5 ; 105) flexible s'étendant dans une direction longitudinale du véhicule et traversant le corps (3 ; 103) d'essieu sensiblement perpendiculaire, ledit bras tiré (5 ; 105) ayant une partie (6 ; 106) ressort avant s'étendant dans la direction longitudinale du véhicule et ledit bras tiré (5 ; 105) ayant une partie (9 ; 109) d'appui d'essieu attenant à la partie (6 ; 106) ressort avant, ladite partie (9 ; 109) d'appui d'essieu ayant un côté concave au niveau duquel le corps (3 ; 103) d'essieu est disposé,
- au moins une sangle (19 ; 119) de fixation par serrage pour attacher le corps (3 ; 103) d'essieu et le bras tiré (5 ; 105) ensemble, la au moins une sangle (19 ; 119) de fixation par serrage a une patte avant (19a ; 119a) et une patte arrière (19c ; 119c) et une partie arquée (19b ; 119b) reliant lesdites pattes avant et arrière, dans laquelle la partie arquée (19b ; 119b) s'étend autour d'une partie de la circonférence du corps (3 ; 103) d'essieu et lesdites pattes (19a, 19c ; 119a, 119c) de la sangle (19 ; 119) sont tendues par rapport au bras tiré (5 ; 105), de sorte que le corps (3 ; 103) d'essieu est serré entre la partie arquée (19b ; 119b) de la sangle (19 ; 119) et ledit côté concave de la partie (9 ; 109) d'appui d'essieu du bras tiré (5 ; 105),
dans laquelle ledit corps (3 ; 103) d'essieu est disposé directement contre le côté concave de la partie (9 ; 109) d'appui d'essieu du bras tiré (5 ; 105), et
dans laquelle la patte avant (19a ; 119a) de la sangle (19 ; 119) s'étend vers l'avant à travers ou le long du côté du bras tiré (5 ; 105) et est supporté au niveau du côté avant de la partie (9 ; 109) d'appui d'essieu et la patte arrière (19c ; 119c) de la sangle (19 ; 119) s'étend à travers ou le long du côté du bras tiré (5 ; 105) vers l'arrière et est supportée au niveau du côté arrière de la partie (9 ; 109) d'appui d'essieu,
**caractérisé en ce que** l'angle entre la patte avant (19a ; 119a) et la patte arrière (19c ; 119c) de la sangle (19 ; 119) est compris dans la plage allant de 90° à 170°.

2. La suspension d'essieu de roue selon la revendication 1, dans laquelle l'angle entre la patte avant et la patte arrière de la sangle est d'environ 110°.

3. La suspension d'essieu de roue selon l'une quelconque des revendications 1 à 2, dans laquelle au moins l'une des pattes avant (19a ; 119a) et arrière (19c ; 119c) de la sangle (19 ; 119) est munie d'une extrémité filetée mâle.

4. La suspension d'essieu de roue selon la revendication 3, dans laquelle chacune de la patte arrière (19c) et de la patte avant (19a) de la sangle (19) sont munies d'une extrémité filetée mâle.

5. La suspension d'essieu de roue selon l'une quelconque des revendications 1 à 4, dans laquelle deux sangles (19 ; 119) de fixation par serrage sont disposées, une de chaque côté du bras tiré (5).

6. La suspension d'essieu de roue selon la revendication 5, dans laquelle les pattes arrière (19c ; 119c) ou les pattes avant desdites deux sangles (19 ; 119) de fixation par serrage sont reliées entre elles par une partie (21 ; 121) de pont s'étendant dans la direction de la largeur au-dessus du bras tiré (5 ; 105).

7. La suspension d'essieu de roue selon la revendication 6, dans laquelle les deux sangles (19 ; 119) de fixation par serrage et la partie (21 ; 121) de pont sont faites d'une pièce.

8. La suspension d'essieu de roue selon l'une quelconque des revendications précédentes, dans laquelle le corps (3) d'essieu a une section transversale sensiblement circulaire et dans lequel la partie (9) d'appui d'essieu du bras tiré (5) a une forme incurvée avec un côté concave courbé venant en prise avec le corps (3) d'essieu.

9. La suspension d'essieu de roue selon la revendication 8, dans laquelle le côté concave courbé entoure la circonférence du corps (3) d'essieu sur 120° à 180°.

10. La suspension d'essieu de roue selon la revendication 8 ou 9, dans laquelle une coque (22) semi-cylindrique est agencée autour d'une partie de la circonférence du corps (3) d'essieu, dans laquelle une partie (23) de ladite coque (22) est serrée entre la sangle (19) et le corps (3) d'essieu.

11. La suspension d'essieu de roue selon la revendication 10, dans laquelle la coque (22) est munie d'une première partie (25) de nez ressortant hors de la surface cylindrique qui vient en prise avec la partie (9) incurvée du bras tiré (5) à l'extrémité avant de celle-ci en alignement avec la patte avant (19a) de la sangle.

12. La suspension d'essieu de roue selon la revendication 11, dans laquelle la coque (22) est munie d'une seconde partie (26) de nez ressortant hors de la partie cylindrique adjacente à la première partie (25) de nez qui vient en prise avec la sangle (19).

13. La suspension d'essieu selon l'une quelconque des revendications 10 à 12, dans laquelle une bille (27) est formée à une extrémité de la coque (22), et dans laquelle un renfoncement (4, 13) est formé dans le corps (3) d'essieu et dans le côté concave de la partie incurvée (9), renfoncement dans lequel la bille (27) est reçue comme une structure de verrouillage.

14. La suspension d'essieu de roue selon l'une quelconque des revendications 1 à 7, dans laquelle le corps (3) d'essieu a une section transversale sensiblement rectangulaire et dans laquelle la partie (109) d'appui d'essieu du bras tiré (105) est formée comme une partie angulaire constituée par la partie (106) ressort avant et une partie du bras tiré adjacente à la partie (106) ressort avant et une partie (107) du bras tiré (105) s'étendant vers le bas et attenant à la partie (106) ressort avant au niveau d'une extrémité arrière de celle-ci et s'étendant sensiblement perpendiculaire à la partie (106) ressort avant.

15. La suspension d'essieu de roue selon la revendication 14, dans laquelle la partie (109) d'appui d'essieu entoure environ 50% du périmètre du corps (3) d'essieu.
